# EUROPÄISCHE PATENTSCHRIFT

(11) **EP 3 458 297 B1**
(45) Veröffentlichungstag und Bekanntmachung des Hinweises auf die Patenterteilung: **09.06.2021**
(21) Anmeldenummer: 17716509.9
(22) Anmeldetag: 06.04.2017
(51) Int. Cl.: B60K 11/06, B60K 11/08, B62J 15/00, B62K 11/04, B60H 1/00

(54) **ABSAUGVORRICHTUNG FÜR EIN KRAFTFAHRZEUG**
EXTRACTION DEVICE FOR A MOTOR VEHICLE
DISPOSITIF D'ASPIRATION POUR UN VÉHICULE AUTOMOBILE

(30) Priorität: 20.05.2016 DE 102016208694
(43) Veröffentlichungstag der Anmeldung: 27.03.2019
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2017/058230
(87) Internationale Veröffentlichungsnummer: WO 2017/198388

(56) Entgegenhaltungen:
- EP-A1- 2 639 092
- DE-A1- 3 026 970
- DE-A1-102014 222 297
- JP-A- 2010 083 371
- JP-A- 2012 086 690
- US-A1- 2006 065 455
- US-A1- 2012 103 716

## Beschreibung

Die Erfindung betrifft eine Absaugvorrichtung für ein Kraftfahrzeug, insbesondere für ein Motorrad oder für ein motorradähnliches Kraftfahrzeug, mit mindestens einem kanalartigen Luftführungsmittel, das mindestens eine Öffnung aufweist, die in oder an einem Abluftbereich einer belüfteten Fahrzeugkomponente des Kraftfahrzeugs, wie Motor, Getriebe oder dergleichen, angeordnet ist und das zwischen dem Abluftbereich der Fahrzeugkomponenten und einem Hinterrad des Kraftfahrzeugs erstreckt ist, und mit mindestens einer Saugeinrichtung, die mit dem Luftführungsmittel verbindbar oder verbunden ist und in der ein Unterdruck erzeugbar ist, um über das mindestens eine Luftführungsmittel Luft aus dem Abluftbereich anzusaugen, wobei die Saugeinrichtung mindestens einen Saugkanal umfasst, der durch mindestens ein Abdeckmittel und durch einen, insbesondere wechselnden, Abschnitt einer Außenfläche des Hinterrads des Kraftfahrzeugs zumindest nahezu in Gänze umschlossen und gebildet ist und in den Luft durch Drehung des Hinterrads über eine Eintrittsöffnung zuführbar, im Saugkanal auf einer im Wesentlichen zum Hinterrad konzentrischen Bahn bewegbar und über eine Austrittsöffnung wieder abführbar ist und wobei das Abdeckmittel mindestens ein von der Eintrittsöffnung des Saugkanals bis zur Mischkammer erstrecktes oberes Abdeckteil, welches im Wesentlichen oberhalb des Hinterrads auf dessen der Fahrbahn gegenüberliegenden Seite angeordnet ist.

Bei Kraftfahrzeugen, insbesondere Motorrädern oder motorradähnlichen Kraftfahrzeugen, sind Kühler und Lüfter im vorderen Bereich des Kraftfahrzeugs angeordnet. Der Fahrtwind wird hierbei zur Erhöhung des Ladedrucks genutzt.

Beim fahrenden Betrieb des Kraftfahrzeugs kann sich im Abluftbereich einer zu entlüftenden Fahrzeugkomponente, wie Motor, Getriebe oder dergleichen, bezüglich der Umgebung ein Unterdruck-Gebiet einstellen, welches zusätzlich der Entlüftung der Fahrzeugkomponente dient. Die Stärke des Unterdruck-Gebiets ist jedoch von der Kontur des Kraftfahrzeugs, inklusive Fahrer und Nutzlasten, sowie der jeweiligen Fahrgeschwindigkeit abhängig.

Hierdurch bedingt kann sich im Abluftbereich auch ein Staubereich einstellen, insbesondere wenn keine ausreichende Luftabfuhr ermöglicht ist, was eine Entlüftung des Abluftbereichs erschwert.

Eine Absaugeinrichtung, die keinen Saugkanal umfasst, dem Luft durch Drehung des Hinterrads zuführbar ist, ist bekannt aus JP 2010 083371 A.

Eine Absaugeinrichtung ohne kanalartiges Luftführungsmittel ist bekannt aus der gattungsgemäßen US 2006/0065455 A1.

Eine Aufgabe eines Ausführungsbeispiels der Erfindung ist, eine Absaugvorrichtung vorzuschlagen, mit der eine verbesserte Luftabfuhr aus dem Abluftbereich ermöglicht ist.

Diese Aufgabe wird gelöst durch eine Absaugvorrichtung gemäß den Merkmalen des Anspruchs 1, bei der das Abdeckmittel mindestens ein von der Mischkammer bis zu Austrittsöffnung des Saugkanals erstrecktes unteres Abdeckteil, welches auf einer dem Vorderrad zugewandten Seite des Hinterrads angeordnet ist.

Dadurch, dass mittels der Saugeinrichtung über das Luftführungsmittel zumindest bei Betrieb des Kraftfahrzeugs Luft aus dem Abluftbereich absaugbar ist, ist die Luftabfuhr aus dem Abluftbereich verbessert. Hierdurch wird zudem eine Entlüftung der zu belüfteten Fahrzeugkomponente verbessert.

Der Abluftbereich der Fahrzeugkomponente kann grundsätzlich innerhalb oder außerhalb eines die Fahrzeugkomponente beinhaltenden Gehäuses angeordnet sein und das Luftführungsmittel in das Gehäuse hineinragen.

Bei einer Ausführungsform der Saugeinrichtung sind der Abluftbereich außerhalb des Gehäuses der Fahrzeugkomponenten und die Öffnung des kanalartigen Luftführungsmittels ebenfalls außerhalb des Gehäuses angeordnet.

Unter einem motorradähnlichen Kraftfahrzeug werden im Folgenden Kraftfahrzeuge wie Neigefahrzeuge, Motorräder, Motorroller, insbesondere zwei-, drei- oder vierrädrige Motorroller, Scooter, Trikes, Quads oder dergleichen verstanden.

Das obere Abdeckteil und das untere Abdeckteil können als gemeinsames Bauteil das Abdeckmittel bilden oder aus voneinander separierbaren Bauteilen gebildet sein. Wenn das obere Abdeckteil und das untere Abdeckteil aus von einander separierbaren Bauteilen gebildet sind, können beide schalenartig miteinander gefügt werden. Darüber hinaus kann das Abdeckmittel aus zwei Halb-Schalen gebildet sein, wobei eine Halbschale sowohl eine Seite des oberen Abdeckteils als auch eine Seite des unteren Abdeckteils umfasst. Solchenfalls umfasst das Abdeckmittel eine linke und eine rechte Schale.

Wenn das obere Abdeckteil und das untere Abdeckteil ein gemeinsames Bauteil, insbesondere Spritzgussteil, umfasst, ist die Montage vereinfacht und das Abdeckmittel bauteilreduziert.

Bei Betrieb des Kraftfahrzeugs dreht sich das Hinterrad kontinuierlich. Unter einem, insbesondere wechselnden, Abschnitt einer Außenfläche des Hinterrads des Kraftfahrzeugs wird daher der jeweils mit dem Abdeckmittel zusammenwirkende und den Saugkanal bildende Abschnitt der Außenfläche des Hinterrads verstanden.

Durch das Drehen des Hinterrads wird Luft im Saugkanal in Drehrichtung des Hinterrads beschleunigt und von der Eintrittsöffnung zur Austrittsöffnung transportiert. Dadurch, dass das Luftführungsmittel mit der Saugeinrichtung verbunden ist wirkt die im Saugkanal beschleunigte Luft wie eine Saugstrahlpumpe und saugt Luft über das Luftführungsmittel an.

Solchenfalls wird die Saugeinrichtung durch ohnehin schon vorhandene Bauteile des Kraftfahrzeugs gebildet und kann bauteilreduziert realisiert werden. Ferner ist kein zusätzliches Antriebsmittel vorzusehen, wodurch das Antriebsmittel gewichtsreduziert und energiesparend ausbildbar ist.

Wenn das Kraftfahrzeug mehrere Hinterräder umfasst, können mehrere Saugeinrichtungen vorgesehen sein oder eine Saugeinrichtung mehrere Saugkanäle umfassen, wobei jedem Hinterrad ein Saugkanal zuordenbar ist.

Darüber hinaus erweist es sich als vorteilhaft, wenn der Saugkanal der Saugeinrichtung mindestens einen als Mischkammer ausgebildeten Abschnitt umfasst, der zwischen der Eintrittsöffnung und der Austrittsöffnung angeordnet ist und in der das Luftführungsmittel in den Saugkanal mündet und wenn der Saugkanal zwischen der Eintrittsöffnung und der Mischkammer einen Bereich mit sich in Bewegungsrichtung der Luft verjüngenden Querschnitt umfasst, der insbesondere an der Mischkammer angrenzend seinen engsten Querschnitt aufweist.

Wenn die Saugeinrichtung einen als Mischkammer ausgebildeten Abschnitt umfasst, wirkt die durch das Hinterrad beschleunigte Luft wie ein Freistrahl einer Saugstrahlpumpe.

Wenn sich der Querschnitt des Saugkanal in Richtung auf die Mischkammer verjüngt und an die Mischkammer angrenzend seinen engsten Querschnitt umfasst, weist die durch das Hinterrad bewegte Luft dort Ihre höchste Geschwindigkeit auf. Hierdurch ist der Saugstrahl Effekt weiter erhöht.

Ferner erweist es sich als vorteilhaft, wenn das Luftführungsmittel quer, schräg oder tangential zur zum Hinterrad konzentrischen Bahn des Saugkanals in den Saugkanal, insbesondere in die Mischkammer des Saugkanals mündet und/oder wenn das Luftführungsmittel einen Querschnitt aufweist, der von der Öffnung in Richtung Mischkammer konstant ist, der sich kontinuierlich verjüngt oder der einen ersten Bereich in dem er sich kontinuierlich verjüngt und einen zweiten Bereich in dem er sich kontinuierlich erweitert, umfasst.

Dadurch, dass das Luftführungsmittel quer, schräg oder tangential in den Saugkanal münden kann, und dass der Querschnitt des Luftführungskanal auf unterschiedliche Art und Weise gestaltbar ist, ist der Saugstrahl Effekt vorgebbar. Darüber hinaus kann die Absaugvorrichtung hierdurch den geometrischen Gegebenheiten des Kraftfahrzeugs angepasst werden. Beispielsweise ist es ermöglicht, die Öffnung des Luftführungskanals oberhalb, auf Höhe und unterhalb der zu entlüftenden Fahrzeugkomponente anzuordnen.

Das Abdeckmittel und der wechselnden Abschnitt der Außenfläche des Hinterrads bilden den Saugkanal. Dieser ist durch das Abdeckmittel und der Außenfläche des Hinterrads zumindest nahezu umschlossen. Aufgrund der Drehung des Hinterrads, ist zwischen der Außenfläche des Hinterrads und dem Abdeckmittel ein Spalt vorzusehen, der ausreichend breit ist, ungewollte Reibung zwischen Hinterrad und Abdeckmittel zu vermeiden und gleichzeitig den Druckverlust gering zu halten. Hierbei erweist es sich als vorteilhaft, wenn das Abdeckmittel, insbesondere das obere und/oder das untere Abdeckteil, bis zu breitesten Stelle des Hinterrads erstreckt ist, insbesondere das Hinterrad an dessen breitesten Stelle seitlich überfängt.

Wenn das Hinterrad an einer Hinterradschwinge des Kraftfahrzeugs montiert ist, erweist es sich als vorteilhaft, wenn das Abdeckmittel, insbesondere das obere und/oder das untere Abdeckteil und/oder das Luftführungsmittel an einer Hinterradschwinge des Kraftfahrzeugs festgelegt sind.

Solchenfalls sind Relativbewegungen zwischen dem Abdeckmittel und dem Hinterrad reduziert.

Bei einer Ausführungsform der Absaugvorrichtung ist die Öffnung im Luftführungsmittel einlauf- oder trichterartig ausgebildet und die Ansaugrichtung, in die Luft aus dem Abluftbereich angesaugt wird, verläuft quer, schräg oder parallel zur Fahrtrichtung des Kraftfahrzeugs.

Durch den trichterartigen Einlauf können Druckverluste reduziert werden. Hierdurch ist die Entlüftung des Abluftbereichs verbessert. Dadurch dass die Ansaugrichtung quer, schräg oder parallel zur Fahrtrichtung des Kraftfahrzeugs verlaufen kann, kann das Luftführungsmittel baulichen und räumlichen Gegebenheiten angepasst werden.

Ferner erweist es sich als zweckmäßig, wenn die Austrittsöffnung des Saugkanals, insbesondere das dem Fahrbahn zugewandte Ende des unteren Abdeckteils, zum Fahrbahn einen Abstand aufweist, der einen bestimmten Freigang zur Fahrbahn aufweist.

Unter einem bestimmten Freigang wird verstanden, dass der Abstand zwischen unterem Abdeckteil und Fahrbahn zumindest derart gewählt ist, dass ein Überwinden von zu überfahrenden Hindernissen ermöglicht ist.

Schließlich erweist es sich als vorteilhaft, wenn das Luftführungsmittel und das Abdeckmittel ein gemeinsames Bauteil, insbesondere eine Hinterradverkleidung, wie Kotflügel, umfassen, und/oder wenn das Luftführungsmittel durch einen Abschnitt des oberen Abdeckteils und durch einen Abschnitt des unteren Abdeckteils gebildet ist und zumindest nahezu in Gänze umschlossen ist.

Solchenfalls kann die Absaugvorrichtung bauteilreduziert und kompakt ausgebildet werden. Darüber hinaus ist eine Montage erleichtert.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Absaugvorrichtung.

In der Zeichnung zeigt:
- Figur 1: Ein erstes Ausführungsbeispiel der Absaugvorrichtung;
- Figur 2: Ein zweites Ausführungsbeispiel der Absaugvorrichtung;
- Figur 3: Ein drittes Ausführungsbeispiel der Absaugvorrichtung.

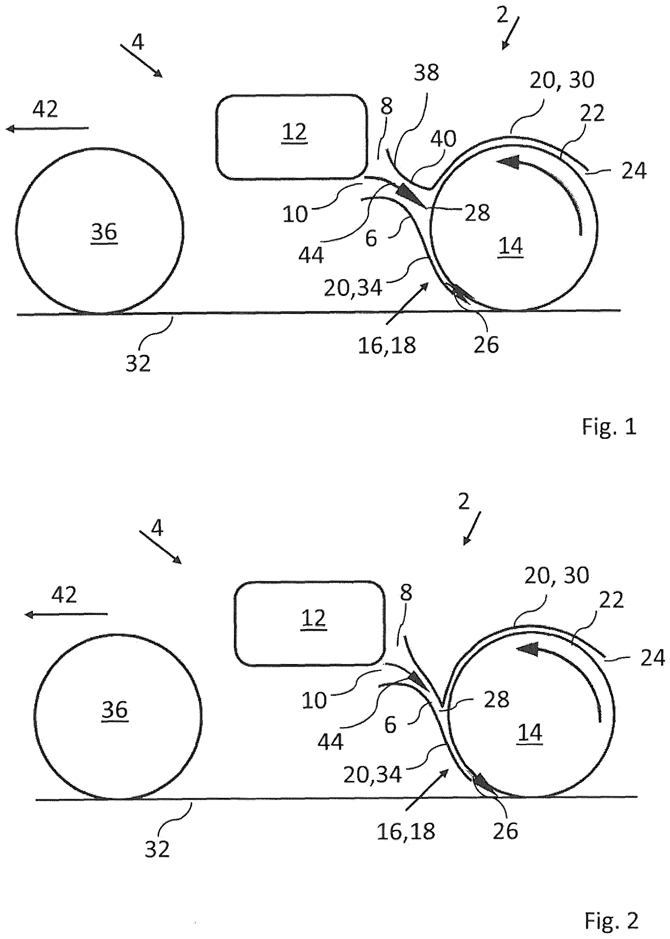

Die Figuren 1 bis 3 zeigen Ausführungsbeispiele eine insgesamt mit dem Bezugszeichen 2 versehene Absaugvorrichtung für ein Kraftfahrzeug 4 (in den Figuren nur schematisch dargestellt). Das in den Figuren dargestellte Kraftfahrzeug 4 umfasst ein Motorrad oder ein motorradähnliches Kraftfahrzeug 4.

Die Absaugvorrichtung 2 umfasst mindestens ein kanalartiges Luftführungsmittel 6, das mindestens eine Öffnung 8 aufweist. Das Luftführungsmittel 6 ist mit der Öffnung 8 in einem Abluftbereich 10 einer belüfteten Fahrzeugkomponenten 12 des Kraftfahrzeugs 4 angeordnet. Mittels der Öffnung 8 kann Luft aus dem Abluftbereich 10 über das Luftführungsmittel 6 angesaugt werden. Bei den in den Figuren gezeigten Ausführungsbeispielen erstreckt sich das Luftführungsmittel 6 von der zu entlüftenden Fahrzeugkomponente 12, insbesondere von deren Abluftbereich 10, in Richtung eines Hinterrads 14 des Kraftfahrzeugs 4.

Darüber hinaus umfasst die Absaugvorrichtung 2 eine Saugeinrichtung 16, die mit dem Luftführungsmittel verbunden ist und in der ein Unterdruck bezüglich des Abluftbereichs 10 erzeugbar ist. Durch die Saugeinrichtung 16 ist durch das Luftführungsmittel 6 Luft aus dem Abluftbereich 10 ansaugbar und der Abluftbereich 10 hierdurch entlüftbar.

Die Saugeinrichtung 16 der in den Figuren gezeigten Ausführungsbeispiele umfasst jeweils einen Saugkanal 18. Dieser ist durch ein Abdeckmittel 20 und durch einen Abschnitt 22 einer Außenfläche des Hinterrads 14 gebildet und durch beide zumindest nahezu in Gänze umschlossen. Durch Drehung des Hinterrads 14 wird Luft über eine Eintrittsöffnung 24 in den Saugkanal 18 zugeführt und über eine Austrittsöffnung 26 aus dem Saugkanal 18 abgeführt.

Darüber hinaus umfassen die in den Figuren gezeigten Saugkanäle 18 jeweils einen als Mischkammer 28 ausgebildeten Abschnitt, der zwischen der Eintrittsöffnung 24 und der Austrittsöffnung 26 angeordnet ist und in den das Luftführungsmittel 6 mündet.

Das Abdeckmittel 20 umfasst ein oberes Abdeckteil 30, das sich im Wesentlichen von der Eintrittsöffnung 24 bis hin zur Mischkammer 28 erstreckt und oberhalb des Hinterrads 14 auf dessen einer Fahrbahn 32 gegenüberliegenden Seite angeordnet ist sowie ein unteres Abdeckteil 34, das sich im Wesentlichen von der Mischkammer 28 bis hin zur Austrittsöffnung 26 erstreckt und das auf einer einem Vorderrad 36 zugewandten Seite des Hinterrads 14 angeordnet ist.

Figur 1 zeigt ein erstes Ausführungsbeispiel der Absaugvorrichtung 2. Bei dieser ist die Öffnung 8 einlauf- oder trichterartig ausgebildet. Das Luftführungsmittel 6 erstreckt sich von der Öffnung 8 in Richtung Mischkammer 28 zunächst mit einem ersten Bereich 38, der einen sich kontinuierlich verjüngenden Querschnitt umfasst, und mit einem zweiten Bereich 40, der hieran anschließt und einen sich kontinuierlich erweiternden Querschnitt umfasst.

Die Öffnung 8 des Luftführungsmittels 6 ist schräg zur Fahrtrichtung 42 angeordnet, wodurch die Ansaugrichtung 44 ebenfalls schräg zur Fahrtrichtung 42 verläuft.

Aus der Anordnung gemäß Figur 1 ist ersichtlich, dass das Luftführungsmittel 6 senkrecht zur konzentrischen Bahn des Saugkanals 18 in die Mischkammer 28 mündet.

Figur 2 zeigt ein zweites Ausführungsbeispiel der Absaugvorrichtung 2. Bei dieser ist die Öffnung 8 ebenfalls einlauf- oder trichterartig ausgebildet. Das Luftführungsmittel 6 erstreckt sich von der Öffnung 8 in Richtung Mischkammer 28 mit einem sich kontinuierlich verjüngenden Querschnitt.

Die Öffnung 8 des Luftführungsmittels 6 ist schräg zur Fahrtrichtung 42 ausgebildet, wodurch die Ansaugrichtung 44 ebenfalls schräg zur Fahrtrichtung 42 verläuft.

Aus der Anordnung gemäß Figur 2 ist ersichtlich, dass das Luftführungsmittel 6 schräg zur konzentrischen Bahn des Saugkanals 18 in die Mischkammer 28 mündet.

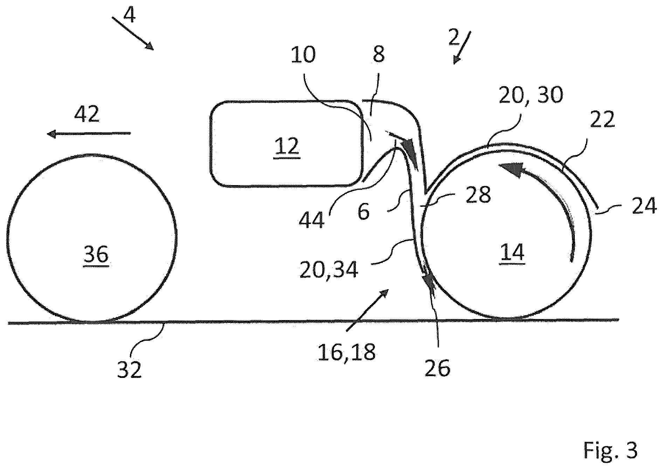

Figur 3 zeigt ein drittes Ausführungsbeispiel der Absaugvorrichtung 2. Bei dieser ist die Öffnung 8 ebenfalls einlauf- oder trichterartig ausgebildet und erstreckt sich über die gesamte Höhe der Fahrzeugkomponente 12. Das Luftführungsmittel 6 erstreckt sich von der Öffnung 8 in Richtung Mischkammer 28 zunächst mit einem sich kontinuierlich verjüngenden Querschnitt.

Die Öffnung 8 des Luftführungsmittels 6 ist in Fahrtrichtung 42 ausgebildet. Das Luftführungsmittel 6 verläuft im Wesentlichen senkrecht zur Fahrtrichtung 42.

Aus der Anordnung gemäß Figur 3 ist ersichtlich, dass das Luftführungsmittel 6 tangential zur konzentrischen Bahn des Saugkanals 18 in die Mischkammer 28 mündet. Im Folgenden wird die Wirkungsweise der Absaugvorrichtung beschrieben.

Bei Betrieb des Kraftfahrzeugs wird das Hinterrad 14 in Drehbewegung versetz. Innerhalb des Saugkanals 18 wird die dort vorhandene Luft durch die Drehung des Hinterrads 14 bewegt und Richtung Austrittsöffnung 26 bewegt.

Durch die Bewegung der Luft steigt der dynamische Druckanteil in der Luft im Saugkanal, wobei der statische Druckanteil sinkt. Sobald der statische Druckanteil in der Mischkammer 28 unter dem Wert des statischen Druckanteils im Abluftbereich 10 gesunken ist, strömt Luft aus dem Abluftbereich 10 über das Luftführungsmittel 6 in die Absaugvorrichtung 2.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Absaugvorrichtung
- 4: Kraftfahrzeug
- 6: Luftführungsmittel
- 8: Öffnung
- 10: Abluftbereich
- 12: Fahrzeugkomponente
- 14: Hinterrad
- 16: Saugeinrichtung
- 18: Saugkanal
- 20: Abdeckmittel
- 22: Abschnitt
- 24: Eintrittsöffnung
- 26: Austrittsöffnung
- 28: Mischkammer
- 30: Oberes Abdeckteil
- 32: Fahrbahn
- 34: Unteres Abdeckteil
- 36: Vorderrad
- 38: Erster Bereich
- 40: Zweiter Bereich
- 42: Fahrtrichtung
- 44: Ansaugrichtung

## Patentansprüche

1. Absaugvorrichtung (2) für ein Kraftfahrzeug (4), insbesondere für ein Motorrad oder für ein motorradähnliches Kraftfahrzeug (4), mit mindestens einem kanalartigen Luftführungsmittel (6), das mindestens eine Öffnung (8) aufweist, die in oder an einem Abluftbereich (10) einer belüfteten Fahrzeugkomponente (12) des Kraftfahrzeugs (4) angeordnet ist und das zwischen dem Abluftbereich (10) der Fahrzeugkomponente (12) und einem Hinterrad (14) des Kraftfahrzeugs (4) erstreckt ist, und mit mindestens einer Saugeinrichtung (16), die mit dem Luftführungsmittel (6) verbindbar oder verbunden ist und in der ein Unterdruck erzeugbar ist, um über das mindestens eine Luftführungsmittel (6) Luft aus dem Abluftbereich (10) anzusaugen, wobei die Saugeinrichtung (16) mindestens einen Saugkanal (18) umfasst, der durch mindestens ein Abdeckmittel (20) und durch einen, insbesondere wechselnden, Abschnitt einer Außenfläche des Hinterrads (14) des Kraftfahrzeugs (4) zumindest nahezu in Gänze umschlossen und gebildet ist und in den Luft durch Drehung des Hinterrads (14) über eine Eintrittsöffnung (24) zuführbar, im Saugkanal (18) auf einer im Wesentlichen zum Hinterrad (14) konzentrischen Bahn bewegbar und über eine Austrittsöffnung (26) wieder abführbar ist und wobei das Abdeckmittel (20) mindestens ein von der Eintrittsöffnung (24) des Saugkanals (18) bis zur Mischkammer (28) erstrecktes oberes Abdeckteil (30) umfasst, das im Wesentlichen oberhalb des Hinterrads (14) auf dessen der Fahrbahn (32) gegenüberliegenden Seite angeordnet ist, **dadurch gekennzeichnet, dass** das Abdeckmittel (20) mindestens ein von der Mischkammer (28) bis zu Austrittsöffnung (26) des Saugkanals (18) erstrecktes unteres Abdeckteil (34) umfasst, das auf einer dem Vorderrad (36) zugewandten Seite des Hinterrads (14) angeordnet ist.

2. Absaugvorrichtung (2) nach Anspruch 1, **dadurch gekennzeichnet, dass** der Saugkanal (18) der Saugeinrichtung (16) mindestens einen als Mischkammer (28) ausgebildeten Abschnitt umfasst, der zwischen der Eintrittsöffnung (24) und der Austrittsöffnung (26) angeordnet ist und in der das Luftführungsmittel (6) in den Saugkanal (18) mündet und/oder dass der Saugkanal (18) zwischen der Eintrittsöffnung (24) und der Mischkammer (28) einen Bereich mit sich in Bewegungsrichtung der Luft verjüngenden Querschnitt umfasst, der insbesondere an der Mischkammer (28) angrenzend seinen engsten Querschnitt aufweist.

3. Absaugvorrichtung (2) nach Anspruch 1 oder 2, **dadurch gekennzeichnet, dass** das Luftführungsmittel (6) quer, schräg oder tangential zur zum Hinterrad (14) konzentrischen Bahn des Saugkanals (18) in den Saugkanal (18), insbesondere in die Mischkammer (28) des Saugkanals (18) mündet und/oder dass das Luftführungsmittel (6) einen Querschnitt aufweist, der von der Öffnung (8) in Richtung Mischkammer (28) konstant ist, der sich kontinuierlich verjüngt oder der einen ersten Bereich (38) in dem er sich kontinuierlich verjüngt und einen zweiten Bereich (40) in dem er sich kontinuierlich erweitert, umfasst.

4. Absaugvorrichtung (2) nach mindestens einem der vorhergehenden Ansprüche, **dadurch gekennzeichnet, dass** das Abdeckmittel (20), insbesondere das obere und/oder das untere Abdeckteil (30, 34), bis zu breitesten Stelle des Hinterrads (14) erstreckt ist, insbesondere das Hinterrad (14) an dessen breitesten Stelle seitlich überfängt.

5. Absaugvorrichtung (2) nach mindestens einem der vorhergehenden Ansprüche, **dadurch gekennzeichnet, dass** das Abdeckmittel (20), insbesondere das obere und/oder das untere Abdeckteil (30, 34), und/oder das Luftführungsmittel (6) an einer Hinterradschwinge des Kraftfahrzeugs (4) festlegbar oder festgelegt sind.

6. Absaugvorrichtung (2) nach mindestens einem der vorhergehenden Ansprüche, **dadurch gekennzeichnet, dass** die Öffnung (8) im Luftführungsmittel (6) einlauf- oder trichterartig ausgebildet ist und die Ansaugrichtung (44), in die Luft aus dem Abluftbereich (10) angesaugt wird, quer, schräg oder parallel zur Fahrtrichtung (42) des Kraftfahrzeugs (4) verläuft.

7. Absaugvorrichtung (2) nach mindestens einem der vorhergehenden Ansprüche, **dadurch gekennzeichnet, dass** die Austrittsöffnung (26) des Saugkanals (18), insbesondere das dem Fahrbahn (32) zugewandte Ende des unteren Abdeckteils, zum Fahrbahn (32) einen Abstand aufweist, der einen bestimmten Freigang zum Fahrbahn (32) aufweist.

8. Absaugvorrichtung (2) nach mindestens einem der vorhergehenden Ansprüche, **dadurch gekennzeichnet, dass** das Luftführungsmittel (6) und das Abdeckmittel (20) ein gemeinsames Bauteil, insbesondere eine Hinterrad (14) Verkleidung, wie Kotflügel, umfassen, und/oder dass das Luftführungsmittel (6) durch einen Abschnitt des oberen Abdeckteils (30) und durch einen Abschnitt des unteren Abdeckteils (34) gebildet ist und zumindest nahezu in Gänze umschlossen ist.

## Claims

1. Extraction apparatus (2) for a motor vehicle (4), in particular for a motorcycle or for a motorcycle-like motor vehicle (4) with at least one duct-like air conducting means (6) which has at least one opening (8) which is arranged in or at an outgoing air region (10) of a ventilated vehicle component (12) of the motor vehicle (4), and which air conducting means (6) extends between the outgoing air region (10) of the vehicle component (12) and a rear wheel (14) of the motor vehicle (4), and with at least one suction device (16) which can be connected or is connected to the air conducting means (6) and in which a vacuum can be generated, in order to suck in air from the outgoing air region (10) via the at least one air conducting means (6), the suction device (16) comprising at least one suction duct (18) which is formed and enclosed at least approximately completely by way of at least one covering means (20) and by way of a section (which, in particular, changes) of an outer face of the rear wheel (14) of the motor vehicle (4), and into which air can be fed via an inlet opening (24) by way of rotation of the rear wheel (14), can be moved in the suction duct (18) on a path which is substantially concentric with respect to the rear wheel (14), and can be discharged again via an outlet opening (26), and the covering means (20) comprising at least one upper covering part (30) which extends from the inlet opening (24) of the suction duct (18) as far as the mixing chamber (28) and is arranged substantially above the rear wheel (14) on the side thereof which lies opposite the roadway (32), **characterized in that** the covering means (20) comprises at least one lower covering part (34) which extends from the mixing chamber (28) as far as the outlet opening (26) of the suction duct (18) and is arranged on a side of the rear wheel (14), which side faces the front wheel (36).

2. Extraction apparatus (2) according to Claim 1, **characterized in that** the suction duct (18) of the suction device (16) comprises at least one section which is configured as a mixing chamber (28), is arranged between the inlet opening (24) and the outlet opening (26), and in which the air conducting means (6) opens into the suction duct (18), and/or **in that** the suction duct (18) comprises, between the inlet opening (24) and the mixing chamber (28), a region with a cross section which tapers in the movement direction of the air, which region has its narrowest cross section, in particular, in a manner which adjoins the mixing chamber (28).

3. Extraction apparatus (2) according to Claim 1 or 2, **characterized in that** the air conducting means (6) opens into the suction duct (18), in particular into the mixing chamber (28) of the suction duct (18), transversely, obliquely or tangentially with respect to the path of the suction duct (18), which path is concentric with respect to the rear wheel (14), and/or **in that** the air conducting means (6) has a cross section which is constant from the opening (8) in the direction of the mixing chamber (28), tapers continuously, or comprises a first region (38), in which it tapers continuously, and a second region (40), in which it widens continuously.

4. Extraction apparatus (2) according to at least one of the preceding claims, **characterized in that** the covering means (20), in particular the upper and/or the lower covering part (30, 34), extends as far as the widest point of the rear wheel (14), in particular encases the rear wheel (14) laterally at its widest point.

5. Extraction apparatus (2) according to at least one of the preceding claims, **characterized in that** the covering means (20), in particular the upper and/or the lower covering part (30, 34), and/or the air conducting means (6) can be fixed or are/is fixed to a rear wheel swing arm of the motor vehicle (4).

6. Extraction apparatus (2) according to at least one of the preceding claims, **characterized in that** the opening (8) in the air conducting means (6) is of inlet-like or funnel-like configuration, and the intake direction (44), in which air is sucked in from the outgoing air region (10), runs transversely, obliquely or parallel with respect to the driving direction (42) of the motor vehicle (4).

7. Extraction apparatus (2) according to at least one of the preceding claims, **characterized in that** the outlet opening (26) of the suction duct (18), in particular that end of the lower covering part which faces the roadway (32), is at a spacing from the roadway (32), which spacing has a certain clearance with respect to the roadway (32).

8. Extraction apparatus (2) according to at least one of the preceding claims, **characterized in that** the air conducting means (6) and the covering means (20) comprise a common component, in particular a rear wheel (14) trim panel, such as a mudguard, and/or **in that** the air conducting means (6) is formed by way of a section of the upper covering part (30) and by way of a section of the lower covering part (34), and is enclosed at least approximately entirely.

## Revendications

1. Dispositif d'aspiration (2) destiné à un véhicule automobile (4), en particulier à une motocyclette ou à un véhicule automobile (4) de type motocyclette, ledit dispositif comprenant au moins un moyen de guidage d'air (6) en forme de conduit, qui comporte au moins une ouverture (8) qui est ménagée dans ou sur une zone d'évacuation d'air (10) d'un composant ventilé (12) du véhicule automobile (4) et qui s'étend entre la zone d'évacuation d'air (10) du composant de véhicule (12) et une roue arrière (14) du véhicule automobile (4), et au moins un moyen d'aspiration (16) qui est relié ou peut être relié au moyen de guidage d'air (6) et dans lequel une dépression peut être générée afin d'aspirer de l'air de la zone d'évacuation d'air (10) par le biais de l'au moins un moyen de guidage d'air (6), le moyen d'aspiration (16) comprenant au moins un conduit d'aspiration (18) qui est au moins presque entièrement fermé et formé par au moins un moyen de recouvrement (20) et par une portion, en particulier alternée, d'une surface extérieure de la roue arrière (14) du véhicule automobile (4) et dans lequel de l'air peut être amené par une ouverture d'entrée (24) par rotation de la roue arrière (14), peut être déplacé dans le conduit d'aspiration (18) sur un trajet sensiblement concentrique à la roue arrière (14) et peut être à nouveau évacué par une ouverture de sortie (26) et le moyen de recouvrement (20) comprenant au moins une partie de recouvrement supérieure (30) qui s'étend de l'ouverture d'entrée (24) du conduit d'aspiration (18) à la chambre de mélange (28) et qui est disposée sensiblement au-dessus de la roue arrière (14) sur son côté opposé à la chaussée (32), **caractérisé en ce que** le moyen de recouvrement (20) comprend au moins une partie de recouvrement inférieure (34) qui s'étend de la chambre de mélange (28) à l'ouverture de sortie (26) du conduit d'aspiration (18) et qui est disposée sur un côté de la roue arrière (14) qui est dirigé vers la roue avant (36).

2. Dispositif d'aspiration (2) selon la revendication 1, **caractérisé en ce que** le conduit d'aspiration (18) du moyen d'aspiration (16) comprend au moins une portion qui se présente sous la forme d'une chambre de mélange (28) et qui est disposée entre l'ouverture d'entrée (24) et l'ouverture de sortie (26) et dans laquelle le moyen de guidage d'air (6) débouche dans le conduit d'aspiration (18) et/ou **en ce que** le conduit d'aspiration (18) comprend entre l'ouverture d'entrée (24) et la chambre de mélange (28) une zone dont la section transversale diminue dans le sens de mouvement de l'air et dont la section transversale la plus étroite est située de manière adjacente à la chambre de mélange (28).

3. Dispositif d'aspiration (2) selon la revendication 1 ou 2, **caractérisé en ce que** le moyen de guidage d'air (6) débouche dans le conduit d'aspiration (18), en particulier dans la chambre de mélange (28) du conduit d'aspiration (18), transversalement, obliquement ou tangentiellement au trajet, concentrique à la roue arrière (14), du conduit d'aspiration (18) et/ou **en ce que** le moyen de guidage d'air (6) a une section transversale qui est constante depuis l'ouverture (8) en direction de la chambre de mélange (28), qui se rétrécit de manière continue ou qui comprend une première zone (38), dans laquelle elle se rétrécit de manière continu, et une deuxième zone (40) dans laquelle elle s'élargit de manière continue.

4. Dispositif d'aspiration (2) selon l'une au moins des revendications précédentes, **caractérisé en ce que** le moyen de recouvrement (20), en particulier la partie de recouvrement supérieure et/ou inférieure (30, 34), s'étend jusqu'au point le plus large de la roue arrière (14), en particulier vient latéralement par-dessus la roue arrière (14) en son point le plus large.

5. Dispositif d'aspiration (2) selon l'une au moins des revendications précédentes, **caractérisé en ce que** le moyen de recouvrement (20), notamment la partie de recouvrement supérieure et/ou inférieure (30, 34), et/ou le moyen de guidage d'air (6) sont fixés ou peuvent être fixés à une aile de roue arrière du véhicule automobile (4).

6. Dispositif d'aspiration (2) selon l'une au moins des revendications précédentes, **caractérisé en ce que** l'ouverture (8) ménagée dans le moyen de guidage d'air (6) est conçue comme une entrée ou un entonnoir et le sens d'aspiration (44), dans lequel l'air est aspiré de la zone d'évacuation (10), s'étend transversalement, obliquement ou parallèlement au sens de marche (42) du véhicule automobile (4).

7. Dispositif d'aspiration (2) selon l'une au moins des revendications précédentes, **caractérisé en ce que** l'ouverture de sortie (26) du conduit d'aspiration (18), en particulier l'extrémité de la partie de recouvrement inférieure qui est dirigée vers la chaussée (32), est espacée de la chaussée (32) d'une distance qui présente un dégagement déterminé par rapport à la chaussée (32).

8. Dispositif d'aspiration (2) selon l'une au moins des revendications précédentes, **caractérisé en ce que** le moyen de guidage d'air (6) et le moyen de recouvrement (20) comprennent un élément structurel commun, notamment un habillage de roue arrière (14), tel qu'un garde-boue, et/ou **en ce que** le moyen de guidage d'air (6) est formé par une portion de la partie de recouvrement supérieure (30) et par une portion de la partie de recouvrement inférieure (34) et est au moins presque entièrement enfermé.
